# EUROPEAN PATENT SPECIFICATION

(11) **EP 2 239 430 B1**
(45) Date of publication and mention of the grant of the patent: **07.03.2012**
(21) Application number: 10250433.9
(22) Date of filing: 09.03.2010
(51) Int. Cl.: F01M 11/00, F02F 7/00, F01M 1/12

(54) **Oil storage structure for engine**
Ölaufbewahrungsstruktur für einen Motor
Structure de stockage d'huile pour moteur

(30) Priority: 31.03.2009 JP 2009087453
(43) Date of publication of application: 13.10.2010
(73) Proprietor: Honda Motor Co., Ltd., Minato-ku Tokyo 107-8556 (JP)
(72) Inventor: Negoro, Masaaki, Wako-shi Saitama 351-0193 (JP); Tadokoro, Hiroshi, Wako-shi Saitama 351-0193 (JP); Osuka, Takanori, Wako-shi Saitama 351-0193 (JP)
(74) Representative: Stevens, Jason Paul

(56) References cited:
- JP-A- 2 227 510
- JP-A- 4 298 618
- US-A- 5 092 292
- US-A1- 2006 288 976

## Description

The present invention relates to an oil storage structure for a small-sized vehicle engine, such as a motorcycle engine.

A conventional engine is known (see, for example, Japanese Patent No. 2578284 (Fig. 8)) in which a crankshaft chamber is isolated from a transmission chamber, an oil pump (a scavenging pump) adapted to suck and supply under pressure the oil in the crankshaft chamber to the transmission chamber is provided, and oil is stored in an oil pan below the crankshaft chamber and in the transmission chamber communicating with the oil pan. In this known technology, the gears of the transmission mechanism do not dip into the oil. Therefore, the transmission chamber and the clutch chamber are allowed to communicate with each other so that oil is stored also in the clutch chamber. Thus, the height of the oil can be suppressed to a low level compared with the transmission chamber alone. However, if the transmission chamber is allowed to communicate with the clutch chamber as mentioned above, the lowest end of the clutch is usually located at a position lower than the transmission gears, and this leads to a problem in that the clutch will dip into the oil. In the state where part of the clutch constantly dips into oil, oil-separation performance between clutch plates lowers, which problematically affects the disengagement performance of the clutch.

To solve such a problem, in an alternative design (see, for example, Japanese Patent No. 3052002 (Fig. 7), oil tank 51), an oil storage chamber for storing oil therein is formed so as to avoid the outer circumference of a clutch. However, in the case where the oil storage chamber is formed so as to avoid the clutch, it is necessary to form a vertically long oil storage chamber to allow an adequate amount of oil to be stored. In the conventional technology, since the crankcase is split into right and left cases, one of the right and left cases and a clutch cover can constitute the oil storage chamber. However, if the technology is used with a crankcase formed in a vertically-split manner, the oil storage chamber will be formed by the upper and lower crankcases and the clutch cover. If the oil storage chamber is formed so as to straddle the three members as described above, there arises a problem in that it is difficult to ensure liquid-tight performance.

The present invention, at least in its preferred embodiments, provides an oil storage structure in which if it is applied to an engine provided with a vertically-split crankcase (that is, a crankcase split into an upper part and a lower part), a clutch mechanism does not dip into the oil so as not to affect clutch disengagement performance and liquid-tight performance can be ensured reliably.

According to the invention, there is provided an oil storage structure of an engine in which a crankcase rotatably supporting a crankshaft and a transmission shaft and forming at least a transmission chamber is provided, a clutch is provided on an end portion of the transmission shaft projecting laterally from the crankcase, and a crankcase cover is provided which is joined to the crankcase to form an oil storage chamber adapted to store oil therein, and is characterized in that: the crankcase is vertically split into an upper crankcase and a lower crankcase with the crankshaft put therebetween; the crankcase cover is formed with a partition wall extending along an outer circumference of the clutch mechanism as viewed from an direction of the transmission shaft; the partition wall divides a space between the crankcase and the crankcase cover into a plurality of chambers; of the plurality of chambers, a chamber which does not include a clutch device is used as the oil storage chamber; and an upper edge portion of the partition wall is at least partially disposed along the surface along which the crankcase is split so that the oil storage chamber may be formed only by the lower crankcase and the crankcase cover.

According to this, the partition wall extending along the outer circumference of the clutch mechanism splits the space between the crankcase and the crankcase cover into chambers, and the chamber which does not include the clutch mechanism is used as the oil storage chamber. Thus, since the clutch mechanism does not dip into oil, the disengagement performance of the clutch can be ensured without affecting the clutch release performance. In addition, since the oil storage chamber of the engine formed by the vertically split crankcase is formed only by the lower crankcase so as not to straddle the upper and lower crankcases, the amount of oil to be stored can be ensured at a maximum while ensuring liquid-tight performance.

Preferably, the partition wall extends along the outer circumference of the clutch mechanism, then extends along an outer circumference of a primary drive gear driven by the crankshaft to drive the clutch mechanism, and merges with the upper edge portion extending along a crankcase surface portion including the crankshaft, and the upper edge portion further merges with a front wall and a lower wall of the oil storage chamber, thus forming annularity, and consequently the oil storage chamber is formed as a closed chamber.

With this structure, the oil storage chamber is formed as a closed chamber by the partition wall avoiding the clutch mechanism and the primary drive gear, the upper edge portion of the crankcase, and the front wall and lower wall of the oil storage chamber. Therefore, the stored oil will not be stirred by the clutch and the drive gears. Thus, the bubbling of the oil is suppressed to slow the progression of the degradation of the oil. In addition, air entrainment can be suppressed on the oil supply side.

In a further preferred form, the engine is provided with a balancer shaft below the crankshaft, a scavenging pump for supplying under pressure oil to the oil storage chamber is coaxially joined to an end portion of the balancer shaft and is driven, and the scavenging pump is incorporated in the oil storage chamber.

With this arrangement, a vacant space occurs on the end portion side of the balancer shaft axially shorter than the crankshaft and the transmission shaft. The vacant space is used to provide the oil storage chamber, in which the scavenging pump is incorporated. The scavenging pump is drivingly connected to the end portion of the balancer shaft and is driven by the balancer shaft. Thus, the oil storage chamber is not enlarged in the direction of the crankshaft for compact configuration. Further, also the pump drive mechanism can be simplified so that the overall engine can be downsized.

In a further preferred form, a feed pump adapted to feed oil in the oil storage chamber to various portions of the engine is provided coaxially with the scavenging pump, and an oil filter connected to an oil passage located on an discharge side of the feed pump is provided at a front wall of the crankcase adjacently to the oil storage chamber.

Thus, the oil storage chamber, the scavenging pump, the feed pump and the oil filter are collectively arranged in the front portion of the crankcase, and so the oil passage connecting them together can be shortened to provide the compact configuration.

Preferably, an oil suction pipe extending along a lowest portion of the oil storage chamber is connected to a suction side of the feed pump. This allows the oil collecting on the lowest portion of the oil storage chamber to be reliably sucked through the suction pipe.

A preferred embodiment of the invention will now be described by way of example only and with reference to the accompanying drawings, in which:
Fig. 1 is a side view of a motorcycle according to an embodiment of the present invention;
Fig. 2 is a longitudinal cross-sectional view of the internal combustion engine of the motorcycle, as viewed from the right;
Fig. 3 is a cross-sectional view taken along line III-III of Fig. 2;
Fig. 4 is a view of a constant-mesh type gear transmission and a gear change mechanism;
Fig. 5 is a development view of a cross-section including a lower balance shaft, a crankshaft and transmission shafts;
Fig. 6 is a cross-sectional view taken along line VI-VI of Fig. 5 as viewed from the right; and
Fig. 7 is a cross-sectional view taken along line VII-VII of Fig. 5 as viewed from the left.

It should be noted that the words "left", "right", "front", "rear" and so on as used in the following description should be interpreted relative to the motorcycle when being ridden forwards.

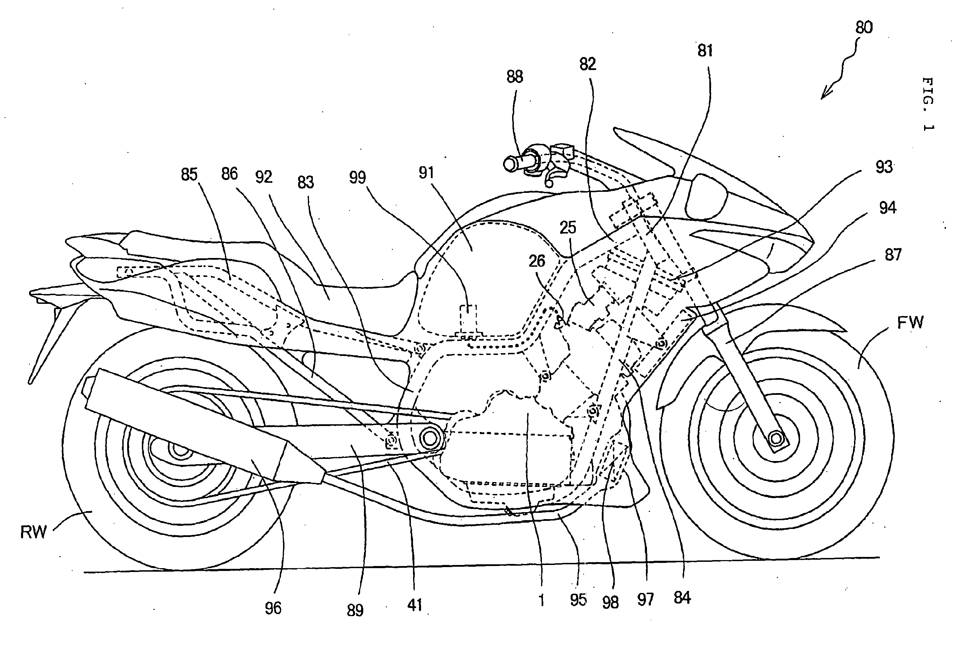

Fig. 1 is a side view of a motorcycle 80 according to an embodiment of the present invention. As can be seen from the figure, a body frame of the motorcycle 80 includes a head pipe 81; main frames 82 extending obliquely rearwardly from the head pipe 81; and centre frames 83 extending downwardly from the rear ends of the main frames 82. The body frame 82 further includes down frames 84 extending downwardly from the head pipe 81; seat stays 85 extending rearwardly from upper portions of the centre frames 83; and mid frames 86 each extending between a rear portion of the centre frame 83 and a rear portion of the seat stay 85. A front fork 87 supporting a front wheel FW is steerably supported by the head pipe 81. A steering handlebar 88 is coupled to an upper portion of the front fork 87. A rear fork 89 supporting a rear wheel RW is supported in a vertically swingable manner by a rear portion of the centre frame 83.

The engine 1 is a two-cylinder internal combustion engine and is supported by the main frames 82, the centre frames 83 and the down frames 84. The power of the engine 1 is transmitted to the rear wheel RW via a transmission built in the engine 1 and via a rear wheel drive chain 41. A fuel tank 91 is mounted on the left and right main frames 82 and centre frames 83 so as to be located above the engine 1. A tandem seat 92 for a driver and a pillion passenger is mounted on the seat stays 85. A throttle body 25 continuous with an intake port of the engine 1 is coupled to an air cleaner 93. A radiator 94 is disposed in front of the engine 1. An exhaust pipe 95 extending from a front surface of the engine 1 extends below the engine 1 and connects with a muffler 96 located at a vehicle body rear portion. A catalyst case 97 of the exhaust pipe 95 is provided at a position forward of the engine and houses a catalyst 98 therein. Fuel in the fuel tank 91 is supplied to an injector (fuel injection valve) 26 via a fuel pump 99 and then to the engine 1.

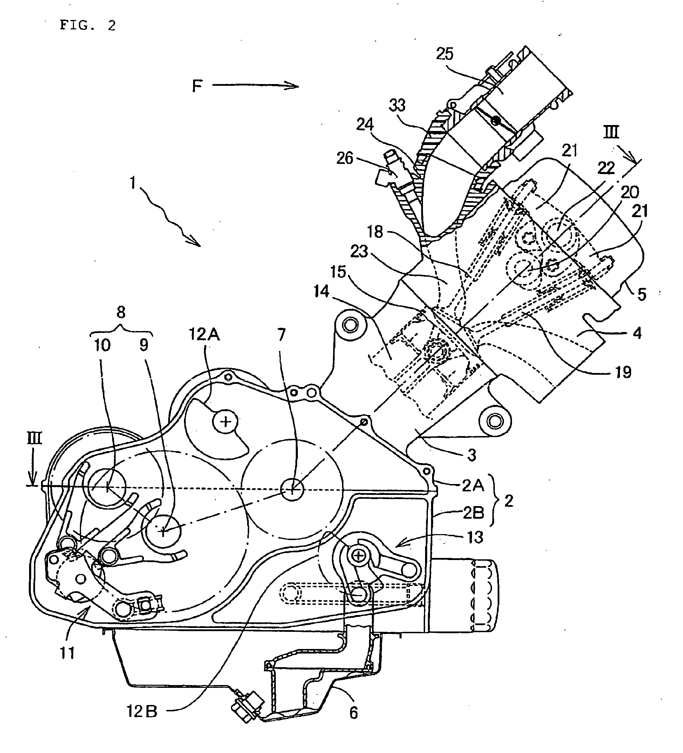

Fig. 2 is a longitudinal cross-sectional view of the above-mentioned two-cylinder engine 1 as viewed from the right. Arrow F indicates the front of the engine 1 corresponding to the front of the vehicle encountered when the engine 1 is mounted on the vehicle. The engine 1 is a transmission-integral type engine. Its main shell includes a vertically split crankcase 2 composed of an upper crankcase 2A and a lower crankcase 2B, a cylinder block 3 formed integrally with the upper crankcase 2A, a cylinder head 4, a cylinder head cover 5, and an oil pan 6 made of a thin steel plate attached to a lower surface of the lower crankcase 2B.

A crankshaft 7 and a counter shaft 10 of the constant-mesh type gear transmission 8 are disposed such that their centrelines lie generally on the division surface between the upper and lower crankcases 2A, 2B. A main shaft 9 of the transmission 8 is disposed below and between the above-mentioned shafts. A gear change mechanism 11 is disposed below the counter shaft 10 and rearward of the main shaft 9. An upper balancer 12A is disposed obliquely rearwardly of and above the crankshaft 7. A lower balancer 12B is disposed obliquely forwardly of and below the crankshaft 7 at a position symmetrical to the upper balancer 12A. The balancers 12A, 12B are directly driven by the crankshaft 7. An oil pump 13 is mounted to the shaft end of the lower balancer 12B. As described later, this oil pump 13 is composed of a scavenging pump 64 and a feed pump 65.

The cylinder block 3 is provided with two cylinders 14. A piston 15 is slideably fitted into each of the cylinders 14. Intake valves 18, exhaust valves 19, a camshaft 20, and a rocker shaft 22 provided with rocker arms 21 are provided on the cylinder head 4. Respective intake passages 23 of the two cylinders 14 are assembled into a single one via an intake manifold portion 24 and connected to a single throttle body 25. The intake manifold portion 24 is equipped with two injectors (fuel injection valves) 26 for respective corresponding cylinders. The throttle body 25 is mounted to the intake manifold portion 24 via an insulator 33.

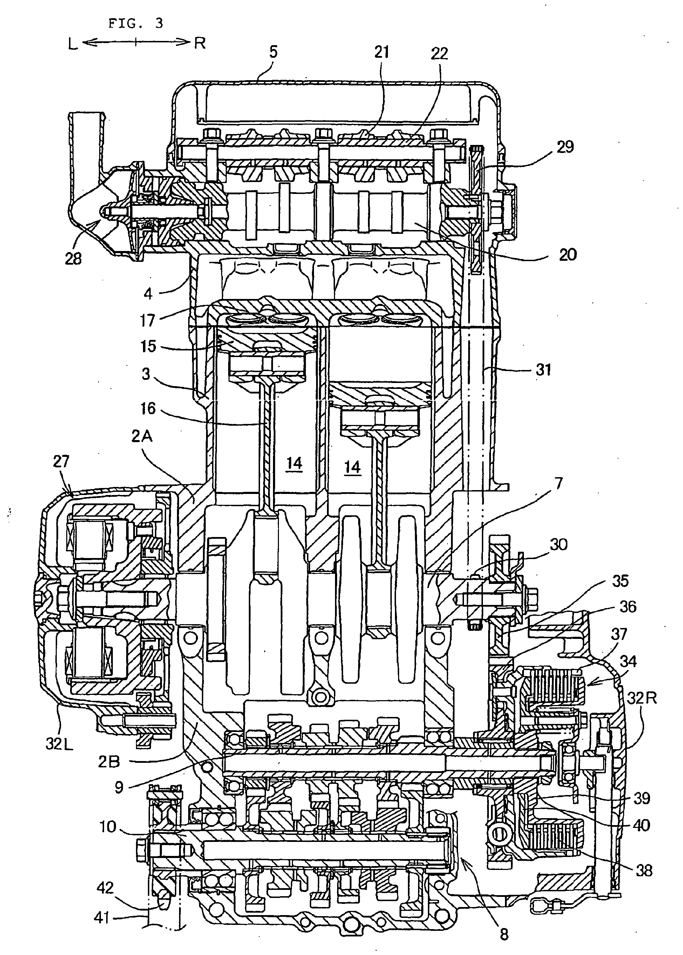

Fig. 3 is a cross-sectional view taken along line III-III of Fig. 2, and is also a horizontal-surface development view of the engine 1 including the camshaft 20, the cylinders 14, the crankshaft 7, the main shaft 9 and the counter shaft 10. In the figure, arrows L and R indicate the left and right, respectively, of the engine 1 corresponding, respectively, to the left and right of the vehicle when the engine 1 is mounted on the vehicle. The shell of the engine 1 is composed of the lower crankcase 2B, the upper crankcase 2A, the cylinder block 3 integral with the upper crankcase 2A, the cylinder head 4, the cylinder head cover 5, the left crankcase cover 32L and the right crankcase cover 32R, starting from the underside. An AC generator 27 is mounted to the left end of the crankshaft 7 and is covered by the left crankcase cover 32L. The cylinder block 3 integral with the upper crankcase 2A is provided with the two cylinders 14. The pistons 15 are slideably fitted into the respective cylinders 14 and connected to the crankshaft 7 via corresponding connecting rods 16. Combustion chambers 17 are defined between the upper surfaces of the pistons 15 and the lower surface of the cylinder head 4. The single camshaft 20 is provided on the cylinder head 4. The single rocker shaft 22 provided with the rocker arm 21 is provided above the camshaft 20. A water pump 28 is attached to the left end portion of the camshaft 20 to circulate cooling water. A camshaft driven sprocket 29 is attached to the right end of the camshaft 20 and is drivingly rotated via a cam chain 31 extending around the camshaft driven sprocket 29 and a camshaft drive sprocket 30 attached to the crankshaft 7.

The main shaft 9 and counter shaft 10 of the transmission 8 are provided parallel to the crankshaft 7. A multi-disk clutch 34 is mounted to the right end of the main shaft 9 and is covered by the right crank case cover 32R. A primary driven gear 36 provided on the main shaft 9 so as to be capable of idle rotation is drivingly rotated by a primary drive gear 35 located at the right end of the crankshaft 7. This rotates a clutch outer 37 which is connected to the primary driven gear 36, so as to rotate a clutch inner 39 via a plurality of friction plates 38. This drivingly rotates the main shaft 9 to which the clutch inner 39 is secured. In this way, the rotation of the crankshaft 7 is transmitted to the main shaft 9. Clutch operation releases the pressing force of the pressurizing plate 40 of the clutch 34 to reduce the friction force of the friction plates 38, which disengages the clutch 34. The constant-mesh type gear transmission 8 is provided on the main shaft 9 and the counter shaft 10. Incidentally, a rear wheel drive sprocket 42 engaged with a rear wheel drive chain 41 for driving the vehicle is attached to the left end of the counter shaft 10.

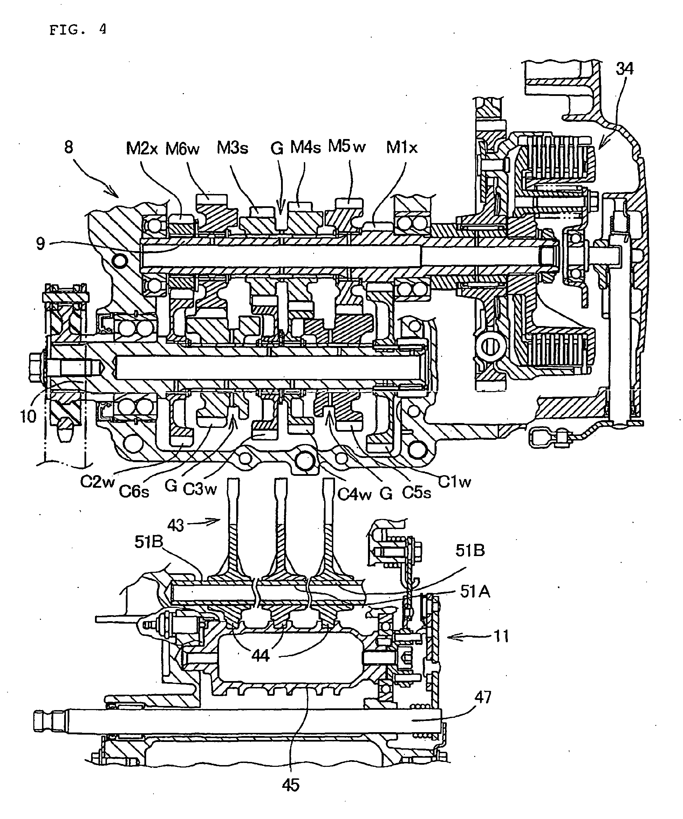

Fig. 4 is a configurational view of the constant-mesh type gear transmission 8 and the gear change mechanism 11. Six gears of the constant-mesh type gear transmission 8 are provided on each of the main shaft 9 and the counter shaft 10. Six gears M1 to M6 are provided on the main shaft 9. Six gears C1 to C6 constantly meshing with the respective gears M1 to M6 are provided on the counter shaft 10. Symbol "M" denotes gears on the main shaft, "C" denotes gears on the counter shaft, and suffixes 1 to 6 denote gears for determining the reduction ratios of first to sixth speeds respectively. Subscript "x" denotes fixed gears, which are integral with the shaft or fixed to the shaft through splines. Subscript "w" denotes idle gears located at given positions, which are capable of rotation relative to the shaft. Subscript "s" denotes slide gears, held on the shaft through splines and being axially movable with respect to the shaft but rotationally fixed with respect to the shaft. The other side gear meshing with the fixed gear (subscript "x") and with the slide gear (subscript "s") is the idle gear (subscript "w"). An idle gear cannot fulfil a function as a gear alone; instead, to fulfil the function as a gear, the idle gear needs to be secured to the shaft by the adjacent slide gear (subscript "s"). Each slide gear (subscript "s") is provided with an engaging groove G adapted to receive a shift fork 43 engaged therewith to axially move the gear. The two slide gears of the main shaft 9 are formed into a single piece and have the engaging groove G formed at the central portion therebetween. The shift fork 43 is driven by the gear change mechanism 11.

The lower portion of Figure 4 illustrates the gear change mechanism 11 for driving the slide gears (subscript "s"). The figure shows three shift forks 43 supported by two shift fork support shafts 51 A, 51 B, a shift drum 45 engaged with pins 44 of the shift forks 43, a change spindle 47, and other parts of the change mechanism. A central shift fork of the three shift forks 43 is engaged with the slide gears of the main shaft 9, and the shift forks on both ends are engaged with the slide gears of the counter shaft 10.

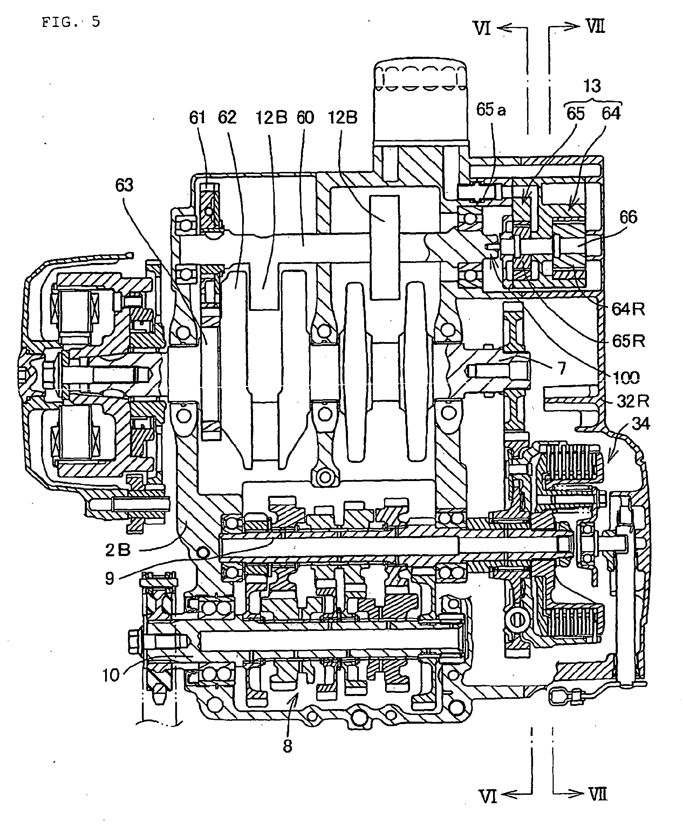

Fig. 5 is a development view of a cross-section including the rotating shaft 60B of the lower balancer 12B, the crankshaft 7, the main shaft 9 and the counter shaft 10. The configuration of the upper balancer 12A and upper balancer shaft 60A is the same as that of the lower balancer 12B and lower balancer shaft 60B. A balancer driven gear 61 provided on the left end of the lower balancer shaft 60B is engaged with a balancer drive gear 63 which is provided adjacently to a left crank web 62 of the crankshaft 7 and which has the same diameter the balancer drive gear 63, and thereby the lower balancer shaft 60B is driven by the crankshaft 7. The upper balancer shaft 60A is also provided with a similar balancer driven gear 61, which is driven by the crankshaft 7.

The oil pump 13 composed of the scavenging pump 64 and the feed pump 65 is provided at the right end of the lower balancer shaft 60B. A rotor 64R of the scavenging pump 64 and a rotor 65R of the feed pump 65 are joined to a single oil pump shaft 66. The oil pump shaft 66 is engaged with the right end of the lower balancer shaft 60B at its left end, i.e., at an engaging portion 100. The oil pump 64, 65 is configured to be capable of rotation at the same speed as that of the lower balancer shaft 60B.

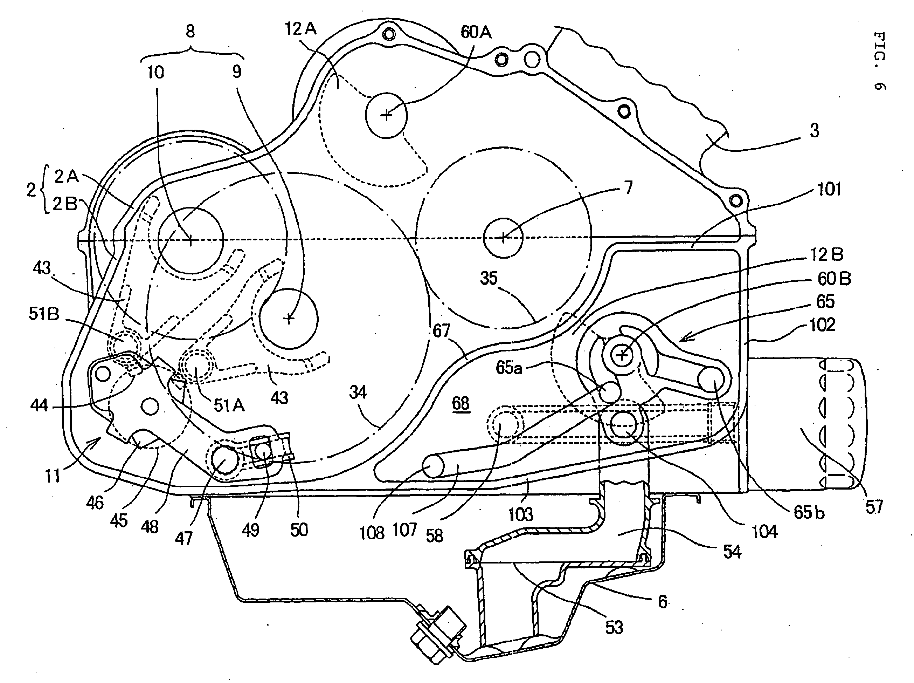

Fig. 6 is a cross-sectional view taken along line VI-VI of Fig. 5 as viewed from the right side, illustrating the space between the crankcase 2 and the right crankcase cover 32R with the right crankcase cover 32R removed. In the left portion of Fig. 6, the gear change mechanism 11 includes the shift drum 45, a star-shaped plate 46, a change spindle 47, a change arm 48 welded to an end of the change spindle 47, a restriction bolt 49, and a change arm return spring 50 and the like. The change spindle 47 is operatively turned to move the change arm 48, which intermittently turns the star-shaped plate 46 and the shift drum 45. In response to this, the shift fork 43 is moved via a pin 44 to operatively shift the transmission 8 up or down.

In the right portion of Fig. 6, a partition wall 67 is formed along an outer circumference of the clutch 34 and of the primary drive gear 35. The partition wall 67 divides a space between the crankcase 2 and the right crankcase cover 32R into two spaces. Of these two spaces, the space which does not include the clutch 34 is used as an oil storage chamber 68. The partition wall 67 extends along the outer circumference of the primary drive gear 35 and merges with an upper edge portion 101 of the lower crankcase 2B extending along the crankcase split surface including the crankshaft. The upper edge portion 101 further merges with a front wall 102 and a lower wall 103 of the lower crankcase 2B and of the right crankcase cover 32R. Thus, these partition walls are annularly continuous with one another so as to define a space as the closed oil storage chamber 68.

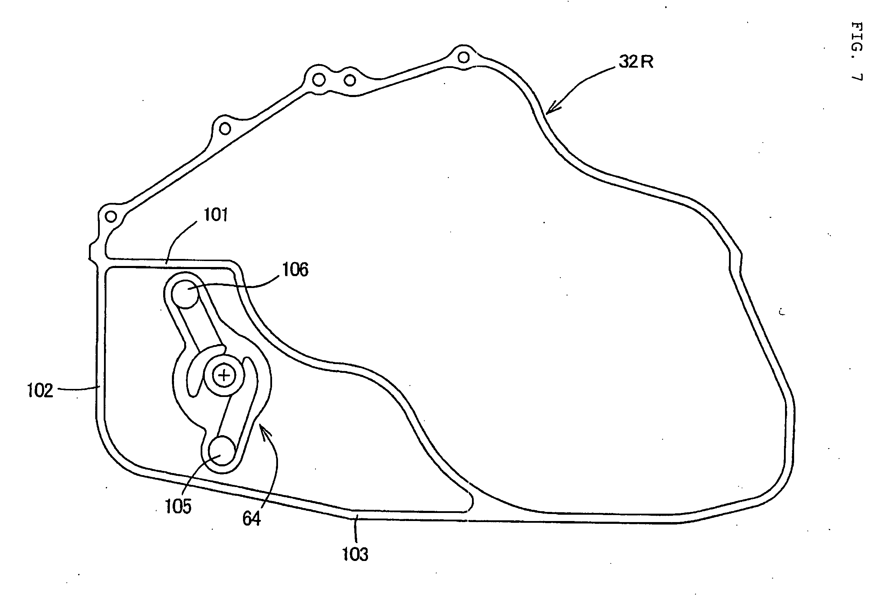

The scavenging pump 64 and the feed pump 65 are incorporated in the oil storage chamber 68. In addition, the scavenging pump 64 and the feed pump 65 are arranged to overlap each other as viewed from the right side. The feed pump 65 in the back is seen in the cross-section of Fig. 6. An oil suction pipe 54 equipped with an oil strainer 53 is installed in the oil pan 6 and is connected at its upper end with an suction port 105 of the scavenging pump 64 of Fig. 7 via an oil passage 104 extending in the direction of the crankshaft. In a wet sump type engine in which oil is stored in an oil pan, because of requiring high rigidity, the oil pan is formed thick. However, as described above, the oil storage chamber 68 for storing oil therein is provided in the lateral portion of the crankcase 2; therefore, the oil pan 6 can be replaced with a press-moulded part made of a thin steel plate.

Fig. 7 is a cross-sectional view taken along line VII-VII of Fig. 5 as viewed from the left. This figure omits the illustration of the clutch 34 for clarity. In the figure, oil discharged from a discharge port 106 of the scavenging pump 64 is stored in the oil storage chamber 68. The oil thus stored is sucked from the suction port 108 of the oil suction pipe 107 of Fig. 6, further sucked from the suction port 65a of the feed pump 65 via the oil suction pipe 107, discharged from the discharge port 65b and supplied to the oil filter 57 at the front wall of the crankcase 2 connecting with the discharge port 65b. Purified oil is supplied to lubricating portions of the engine 1 via the main gallery 58.

The embodiment as described above in detail provides the following effects.
(1) The partition wall 67 extending along the outer circumference of the clutch 34 divides the space between the lower crankcase 2B and the right crankcase cover 32R into two chambers. One of them, not including the clutch 34, is allowed to serve as the oil storage chamber 68 which allows for oil storage between the lower crankcase 2B and the right crankcase cover 32R. Thus, since the clutch 34 does not dip into oil, clutch release performance is not affected, thereby ensuring the disengagement performance of the clutch. The oil storage chamber 68 of the engine formed of the vertically split crankcase 2A, 2B is formed only from the lower crankcase 2B, and does not straddle the upper and lower crankcases. Thus, the amount of stored oil can be ensured at a maximum while ensuring liquid-tight performance.
(2) The oil storage chamber 68 is formed as a closed space defined by the partition wall 67 avoiding the clutch 34 and the primary drive gear 35, the upper edge portion 101 of the lower crankcase 2B and the front wall 102 and lower wall 103 of the oil storage chamber 68. Therefore, the stored oil will not be stirred by the clutch 34 and the primary drive gear 35. Thus, bubbling of the oil is suppressed to thereby slow the progression of degradation of the oil. In addition, air entrainment can be suppressed on the oil supply side.
(3) The scavenging pump 64 is drivingly connected to the end of the lower balancer shaft 60B and is incorporated in the oil storage chamber 68. A vacant space occurs on the side of the balancer shaft 60, which is axially shorter than the crankshaft 7 and the transmission shafts 9, 10. This vacant space is used to house the oil storage chamber 68, and further the scavenging pump 64 incorporated therein is driven by the balancer shaft 60. In this way, the oil storage chamber 68 does not increase the width in the direction of the crankshaft, that is, the vacant space is used for make the engine more compact. Further, the pump drive mechanism can also be made to have a simple structure by use of the vacant space so that the overall size of the engine can be reduced.
(4) The oil storage chamber 68, the scavenging pump 64, the feed pump 65 and the oil filter 57 are collectively arranged in the front portion of the crankcase 2. Thus, the oil passage connecting them together can be shortened to provide a more compact configuration.
(5) The oil suction pipe 107 is provided to extend along the lowest portion of the oil storage chamber 68 and is coupled to the suction side of the feed pump 65. Thus, the oil collecting on the lowest portion of the oil storage chamber can reliably be sucked through the suction pipe 107.

## Claims

1. An oil storage structure of an engine (1) in which a crankcase (2) rotatably supporting a crankshaft (7) and a transmission shaft (9) and forming at least a transmission chamber is provided, a clutch mechanism (34) is provided on an end portion of the transmission shaft (9), projecting laterally from the crankcase (2), and a crankcase cover (32R) is provided which is joined to the crankcase (2) to form an oil storage chamber (68) adapted to store oil therein,
wherein
the crankcase cover (32R) is formed with a partition wall (67) extending along an outer circumference of the clutch mechanism (34) as viewed from an direction of the transmission shaft (9),
the partition wall (67) divides a space between the crankcase (2) and the crankcase cover (32R) into a plurality of chambers, and
of the plurality of chambers, a chamber (68) which does not include a clutch mechanism (34) is used as the oil storage chamber (68), **characterized in that** the crankcase (2) is split into an upper crankcase (2A) and a lower crankcase (2B), with the crankshaft (7) put therebetween, and
an upper edge portion (101) of the partition wall (67) is at least partially disposed along the surface along which the crankcase (2) is split so that the oil storage chamber (68) may be formed only by the lower crankcase (2B) and the crankcase cover (32R).

2. The oil storage structure of an engine according to claim 1,
wherein the partition wall (67) extends along the outer circumference of the clutch mechanism, then extends along an outer circumference of a primary drive gear driven by the crankshaft to drive the clutch mechanism, and merges with the upper edge portion (101) extending along a crankcase surface portion including the crankshaft (7), and the upper edge portion (101) further merges with a front wall (102) and a lower wall (103) of the oil storage chamber (68), thus forming a closed wall, and consequently the oil storage chamber (68) is formed as a closed chamber.

3. The oil storage structure of an engine according to claim 1 or 2,
wherein the engine (1) is provided with a balancer shaft (60B) below the crankshaft (7).
a scavenging pump (64) for supplying under pressure oil to the oil storage chamber (68) is coaxially joined to an end portion of the balancer shaft (60B) and is driven, and
the scavenging pump (64) is incorporated in the oil storage chamber (68).

4. The oil storage structure of an engine according to claim 3,
wherein a feed pump (65) adapted to feed oil in the oil storage chamber (68) to various portions of the engine (1) is provided coaxially with the scavenging pump (64), and
an oil filter (57) connected to an oil passage located on an discharge side of the feed pump (65) is provided at a front wall of the crankcase (2) adjacently to the oil storage chamber (68).

5. The oil storage structure of an engine according to claim 4,
wherein an oil suction pipe (107) extending along a lowest portion of the oil storage chamber (68) is connected to a suction side of the feed pump (65).

## Patentansprüche

1. Ölspeicherstruktur eines Motors (1), in welchem ein Kurbelgehäuse (2) vorgesehen ist, das eine Kurbelwelle (7) und eine Getriebewelle (9) drehbar lagert und wenigstens eine Getriebekammer bildet, ein Kupplungsmechanismus (34) an einem Endabschnitt der Getriebewelle (9) vorgesehen ist, der seitlich von dem Kurbelgehäuse (2) vorsteht, und eine Kurbelgehäuse-Abdeckung (32R) vorgesehen ist, die mit dem Kurbelgehäuse (2) verbunden ist, um eine Ölspeicherkammer (68) zu bilden, die angepasst ist, um Öl darin zu speichern,
wobei die Kurbelgehäuse-Abdeckung (32R) mit einer Trennwand (67) ausgebildet ist, die sich, bei Betrachtung aus einer Richtung der Getriebewelle (9), entlang eines Außenumfangs des Kupplungsmechanismus (34) erstreckt,
die Trennwand (67) einen Raum zwischen dem Kurbelgehäuse (2) und der Kurbelgehäuse-Abdeckung (32R) in eine Mehrzahl von Kammern aufteilt, und
eine Kammer (68) von der Mehrzahl von Kammern, die nicht einen Kupplungsmechanismus (34) umfasst, als die Ölspeicherkammer (68) verwendet wird,
**dadurch gekennzeichnet, dass** das Kurbelgehäuse (2) in ein oberes Kurbelgehäuse (2A) und ein unteres Kurbelgehäuse (2B) aufgeteilt ist, wobei die Kurbelwelle (7) dazwischen eingesetzt ist, und
ein oberer Randabschnitt (101) der Trennwand (67) wenigstens teilweise entlang der Fläche angeordnet ist, entlang welcher das Kurbelgehäuse (2) aufgeteilt ist, so dass die Ölspeicherkammer (68) nur durch das untere Kurbelgehäuse (2B) und die Kurbelgehäuse-Abdeckung (32R) ausgebildet sein kann.

2. Ölspeicherstruktur eines Motors nach Anspruch 1,
wobei die Trennwand (67) sich entlang des Außenumfangs des Kupplungsmechanismus erstreckt, sich dann entlang eines Außenumfangs eines primären Antriebszahnrads erstreckt, welches von der Kurbelwelle angetrieben wird, um den Kupplungsmechanismus anzutreiben, und mit dem oberen Randabschnitt (101) zusammenläuft, der sich entlang eines Kurbelgehäuse-Oberflächenabschnitts erstreckt, welcher die Kurbelwelle (7) umfasst, und der obere Randabschnitt (101) weiter mit einer Vorderwand (102) und einer unteren Wand (103) der Ölspeicherkammer (68) zusammenläuft, wodurch eine geschlossene Wand gebildet wird, und folglich die Ölspeicherkammer (68) als eine geschlossene Kammer ausgebildet ist.

3. Ölspeicherstruktur eines Motors nach Anspruch 1 oder 2,
wobei der Motor (1) mit einer Ausgleichswelle (60B) unter der Kurbelwelle (7) ausgebildet ist,
eine Rückförderpumpe (64) zum Zuführen von unter Druck stehendem Öl zu der Ölspeicherkammer (68) koaxial mit einem Endabschnitt der Ausgleichswelle (60B) verbunden ist und angetrieben wird, und
die Rückförderpumpe (64) in die Ölspeicherkammer (68) eingebaut ist.

4. Ölspeicherstruktur des Motors nach Anspruch 3,
wobei eine Förderpumpe (65), die angepasst ist, um Öl in der Ölspeicherkammer (68) zu verschiedenen Abschnitten des Motors (1) zu fördern, koaxial mit der Rückförderpumpe (64) vorgesehen ist, und wobei
ein Ölfilter (57), der mit einem an einer Ausgangsseite der Förderpumpe (65) vorgesehenen Öldurchgang verbunden ist, an einer vorderen Wand des Kurbelgehäuses (2) benachbart zu der Ölspeicherkammer (68) vorgesehen ist.

5. Ölspeicherstruktur eines Motors nach Anspruch 4,
wobei ein Öl-Ansaugrohr (107), welches sich entlang eines untersten Abschnitts der Ölspeicherkammer (68) erstreckt, mit einer Saugseite der Förderpumpe (65) verbunden ist.

## Revendications

1. Structure de stockage d'huile d'un moteur (1) dans lequel est disposé un carter (2) supportant de manière rotative un vilebrequin (7) et un arbre de transmission (9) et formant au moins une chambre de transmission, un mécanisme d'embrayage (34) est disposé sur une partie d'extrémité de l'arbre de transmission (9), en faisant saillie latéralement du carter (2), et un couvercle de carter (32R) est disposé en étant joint au carter (2) pour former une chambre de stockage d'huile (68) apte à stocker de l'huile à l'intérieur de celle-ci,
dans laquelle le couvercle de carter (32R) est pourvu d'une cloison (67) s'étendant le long d'une circonférence extérieure du mécanisme d'embrayage (34) en vue d'une direction de l'arbre de transmission (9),
la cloison (67) divise un espace entre le carter (2) et le couvercle de carter (32R) en une pluralité de chambres, et
parmi la pluralité de chambres, une chambre (68) qui ne comprend pas de mécanisme d'embrayage (34) est utilisée en tant que chambre de stockage d'huile (68),
**caractérisée en ce que** le carter (2) est divisé en un carter supérieur (2A) et un carter inférieur (2B), le vilebrequin (7) étant placé entre ceux-ci, et
une partie de bord supérieur (101) de la cloison (67) est au moins partiellement disposée le long de la surface sur laquelle le carter (2) est divisé de sorte que la chambre de stockage d'huile (68) ne puisse être formée que par le carter inférieur (2B) et le couvercle de carter (32R).

2. Structure de stockage d'huile d'un moteur selon la revendication 1,
dans laquelle la cloison (67) s'étend le long de la circonférence extérieure du mécanisme d'embrayage, puis s'étend le long d'une circonférence extérieure d'un engrenage d'entraînement principal entraîné par le vilebrequin pour entraîner le mécanisme d'embrayage, et fusionne avec la partie de bord supérieur (101) s'étendant le long d'une partie de surface de carter comprenant le vilebrequin (7), et la partie de bord supérieur (101) fusionne en outre avec une paroi avant (102) et une paroi inférieure (103) de la chambre de stockage d'huile (68), en formant ainsi une paroi fermée, et par conséquent la chambre de stockage d'huile (68) est formée en tant que chambre fermée.

3. Structure de stockage d'huile d'un moteur selon la revendication 1 ou 2,
dans laquelle le moteur (1) est pourvu d'un arbre d'équilibrage (60B) au-dessous du vilebrequin (7),
une pompe de balayage (64) pour fournir de l'huile sous pression à la chambre de stockage d'huile (68) est jointe de manière coaxiale à une partie d'extrémité de l'arbre d'équilibrage (60B) et est entraînée, et
la pompe de balayage (64) est incorporée à la chambre de stockage d'huile (68).

4. Structure de stockage d'huile d'un moteur selon la revendication 3,
dans laquelle une pompe d'alimentation (65) apte à fournir de l'huile de la chambre de stockage d'huile (68) à diverses parties du moteur (1) est pourvue de manière coaxiale à la pompe de balayage (64), et
un filtre à huile (57) raccordé à un passage d'huile situé sur un côté de sortie de la pompe d'alimentation (65) est disposé à une paroi avant du carter (2) de manière adjacente à la chambre de stockage d'huile (68).

5. Structure de stockage d'huile d'un moteur selon la revendication 4,
dans laquelle un tuyau d'aspiration d'huile (107) s'étendant de la plus basse partie de la chambre de stockage d'huile (68) est raccordé à un côté d'aspiration de la pompe d'alimentation (65).
